(19) Europäisches Patentamt
European Patent Office
Office européen des brevets

(11) **EP 1 579 978 B1**

(12) **EUROPÄISCHE PATENTSCHRIFT**

(45) Veröffentlichungstag und Bekanntmachung des Hinweises auf die Patenterteilung:
**20.05.2009 Patentblatt 2009/21**

(51) Int Cl.:
***B29C 47/90*** *(2006.01)* *B29C 35/16* *(2006.01)*

(21) Anmeldenummer: **05102369.5**

(22) Anmeldetag: **24.03.2005**

(54) **Vakuumkalibriervorrichtung**

Vacuum sizing device

Calibreur à vide

(84) Benannte Vertragsstaaten:
**AT BE BG CH CY CZ DK EE ES FI FR GB GR HU IE IS IT LI LT LU MC NL PL PT RO SE SI SK TR**

(30) Priorität: **26.03.2004 DE 102004015391**

(43) Veröffentlichungstag der Anmeldung:
**28.09.2005 Patentblatt 2005/39**

(73) Patentinhaber: **Veka AG**
**48324 Sendenhorst (DE)**

(72) Erfinder: **Schmidt, Rainer**
**49088 Osnabrück (DE)**

(74) Vertreter: **Tarvenkorn, Oliver et al**
**Spieker & Jaeger**
**Hafenweg 14**
**48155 Münster (DE)**

(56) Entgegenhaltungen:
**EP-A- 0 659 537** **US-A- 4 000 625**
**US-A- 5 514 325**

**Beschreibung**

Die Erfindung betrifft eine Vakuumkalibriervorrichtung zur Kalibrierung eines extrudierten Kunststoffhohlprofils, mit einem Wassertank,

- in dem eine Vielzahl von untereinander beabstandeten Abstreifelementen angeordnet ist,
- der einen Wasserzulauf, einen Wasserablauf und einen Vakuumleitungsanschluss aufweist und
- der an seinen Stirnseiten jeweils mit Durchführungsöffnungen für das Kunststoffhohlprofil versehen ist,

und wobei ein Fließweg für Kühlwasser alternierend seitlich an den Abstreifelementen vorbei geführt ist.

Eine solche Vakuumkalibriervorrichtung ist aus der EP 659 537 A2 bekannt. Hierbei reichen die Abstreifelemente bis zum Deckel des Wassertanks und bilden jeweils abgeschlossene Teilkammern. Der Wasserfluss wird durch die Druckdifferenz im Tank ermöglicht. Das Wasser fließt durch Öffnungen in den Abstreifblenden, wobei die Öffnungen benachbarter Abstreifblenden versetzt zueinander angeordnet sein können, wodurch sich ein mäanderförmiger Fließweg ergibt.

Bei der bekannten Vakuumkalibriervorrichtung ergeben sich zum einen Probleme mit Kratzern auf der Profiloberfläche, die unter anderem durch Partikel in der Kühlflüssigkeit, die zwischen Profil und Abstreifblende eingeklemmt werden, verursacht werden und zu länglichen Kratzern auf der Profiloberfläche führen. Üblicherweise werden zur Reduzierung dieses Problems Filteranlagen eingesetzt, die grobe Verunreinigungen aus der Kühlflüssigkeit entfernen können. Der Filtervorgang ist mit einem entsprechenden Druckverlust verbunden. Zudem sind sowohl die Filteranlagen, als auch die Pumpen zur Druckerhöhung ein Kostenfaktor.

Zum anderen verursacht die Abschottung der Teilkammern bis unter den Deckel immer dann eine Veränderung des Wasserstroms, wenn sich die Druckdifferenz der Luft im Tank zwischen Wassereinlass und Wasserauslass ändert. Der Wasserstrom muss in diesen Fällen nachgeregelt werden. Die Schwankungen in der Strömungsgeschwindigkeit führen zu Verwirbelungen, die wiederum das Absetzverhalten der Partikel verschlechtert.

Ein weiteres Problem bei der vorgenannten und bei anderen bekannten Kalibriervorrichtungen ist auch die Luftundichtigkeit, die zu einer überhöhten Leistung bei den eingesetzten Vakuum-Pumpen führt. Ein bestimmtes Vakuum ist notwendig, um den Innendruck im Tank soweit herabzusetzen, dass sich die Profilwände an die Kalibrierplatten anlegen.

Die US-PS 5514325 offenbart eine Vakuum-kalibriervorrichtung zur Kalibrierung eines extrudierten Kunststoffhohlprofils. So hat die die zur Gewährleistung eines kontinuierlichen Kühlwasserstroms erforderliche Druckdifferenz in einem Tank der bekannten Vorrichtung negative Auswirkungen auf die Formgebung des Profils. So führt eine Druckdifferenz im Tank dazu, dass das Hohlkörperprofil im stromabwärts gelegenen Bereich der Kalibriervorrichtung stärker auseinander gezogen wird, und die Profilflächen - von außen betrachtet - eine konvexe Verformung erfahren. Um diese Verformung zu verhindern, muss der Abstand der Kurzkaliber im Tank sehr eng gewählt werden.

Gleiches gilt für eine aus der EP-A 659 537 bekannte Vakuum-Kalibriervorrichtung, bei der sich zusätzlich eine ungünstige Strömungsverwirbelung durch frei im Tank stehende Seitenkanten der Abstreifelemente ergibt.

Die Erfindung hat es sich zur Aufgabe gemacht, die Kratzerbildung in den Vakuumkalibriervorrichtung zu reduzieren.

Erfindungsgemäß wird diese Aufgabe durch eine Vakuumkalibriervorrichtung mit den Merkmalen des Anspruchs 1 gelöst.

Mit "erstem Abstreifelement" ist das erste für das hydrostatische Druckgefälle wirksame Abstreifelement bezeichnet, wobei nicht ausgeschlossen ist, dass stromaufwärts noch weitere Abstreifelemente zur zusätzlichen Führung des zu kalibrierenden Kunststoffhohlprofils vorhanden sind. Dasselbe gilt für die Bezeichnung "letztes Abstreifelement". Auch hier können stromabwärts noch zusätzliche Abstreifelemente als Führung für das Profil oder als Schott zur Abgrenzung weiterer Teilkammern folgen.

Mit "Kühlwasser" wird eine für die Abkühlung von Kunststoffhohlprofil geeignete Kühlflüssigkeit bezeichnet, wobei es sich um reines Leitungswasser handeln kann. Mit Zusätzen versetztes Wasser kann jedoch ebenso eingesetzt werden wie andere nicht wasserbasierende Flüssigkeiten.

Diese Lösung hat den Vorteil, dass die Kratzerbildung auf dem Profil durch Fremdpartikel, die aus dem Kühlmedium stammen, dadurch reduziert wird, dass Fließwege bereit gestellt werden, die bei gegebenem Volumenstrom für das Kühlwasser zu einer so langen Verweilzeit der Fremdpartikel führen, dass diese bis auf den Boden des Wassertanks absinken, oder zumindest so weit, dass sie nicht mehr zwischen dem Kunststoffhohlprofilstrang und Abstreifelement eingezogen werden und sich dort festsetzen können. Der Raum oberhalb des Wasserspiegels in den Teilkammern und oberhalb der Abstreifelemente in dem nach außen luftdicht abgeschlossenen Wassertank ist luftgefüllt und steht unter einem einheitlichen Luftdruck. Dies hat den Vorteil, dass eine Druckänderung im Tank keinen Einfluss auf die Fließgeschwindigkeit des Wassers hat und damit die Voraussetzungen für ein gleichmäßiges Absinken nicht gestört werden. Unabhängig vom Unterdruck im Tank fließt immer die gleiche Wassermenge durch den Tank. Durch das hydrostatische Druckgefälle zusammen mit der Unterteilung des Tanks in Teilkammern bildet sich ein treppenförmiger Verlauf der Wasserstände in seitlicher Ansicht über die Länge des Wassertanks gesehen.

Die seitlichen Fließkanäle sind alternierend links und rechts in Höhe der Kaliber durch eingesetzte Prallbleche verschlossen, so dass eine Zwangsumleitung von links nach rechts und damit eine mäanderförmige Strömung bewirkt wird.

Der Wassertank weist an beiden Seiten trapezförmige Ausbuchtungen als Fließkanäle auf. Die Trapezform stellt mit ihren Schrägen ein Abfließen des Wassers in jedem Fall sicher und erleichtert die Reinigung des Wassertanks. Gegenüber einer dreieckigen Querschnittsform der Fließkanäle ist die Trapezform auch deshalb vorteilhaft, weil mehrere Profile nebeneinander extrudiert werden können. Bei solchen Mehrfachextrusionsanlagen ist der Achsabstand der Kalibriertanks vorgegeben, wodurch auch die zulässige Auskragung jedes Wassertanks begrenzt ist. Die Trapezform ermöglicht also eine dichtere Anordnung Seite an Seite.

Die Fließwege sind somit künstlich verlängert, um während der Aufenthaltsdauer eines Fremdpartikels in einer Teilkammer ein Absinken bis auf den Boden des Wassertanks zu ermöglichen. Dabei sinken die größeren, schwereren Partikel zuerst, und im Verlauf des Fließwegs werden dann auch zunehmend kleinere Partikel aus dem Kühlwasser abgeschieden.

Besonders vorteilhaft ist es, wenn die Länge der Teilkammern zwischen dem Einlauf und dem Auslauf zunimmt. Die Chance, dass ein Partikel in einer Teilkammer absinken kann und nicht durch Wasserwirbel am Sinken gehindert wird, wird immer größer, je mehr die Verweilzeit im Tank zunimmt.

Vorzugsweise sind Verbindungen zwischen mehreren Vakuumkalibriervorrichtungen bzw. einer Vakuumkalibriervorrichtung mit weiteren Anlagenteilen durch Konus- oder Kugelabschnitts-Verbindungen gebildet. Die zueinander kompatiblen Spitz- und Muffenenden, also ein Rohrflansch mit einem kegel- oder kugelabschnittsförmigen Außenmantel und ein Rohrflansch mit einer kegel- oder kugelabschnittsförmigen Bohrung, werden durch Spannhebel aufeinander gezogen. Damit werden die Vakuumkalibriervorrichtungen und Anlagenteile luft- und wasserdicht verschlossen.

Durch kugelabschnittsförmige Ausführungsformen ist es insbesondere möglich, einen Winkelversatz der Längsachsen der Wassertanks bzw. Anlagenteile auszugleichen.

Die Rohrflansche können aus Polyamid gefertigt sein, wobei vorzugsweise der innere Rohrflansch einen zusätzlichen umlaufenden Dichtring aus Gummi etc. aufweist.

Durch eine erfindungsgemäß deutlich verbesserte Luftdichtigkeit werden die Druckschwankungen im Inneren des Tanks deutlich reduziert, was zu einer gleichmäßig glatten Profiloberfläche führt. Vorteilhaft ist es weiterhin, am Ende des Wassertanks jeweils eine wassergeflutete Kammer vorzusehen, die hinter dem Wasserablauf angeordnet ist. Es ist ein Abstreifelement als Schottwand vorgesehen, deren Oberkante höher reicht als die Unterkante der Durchführungsöffnung am Verbindungskonus, so dass das durch die Öffnungsausnehmung nach außen geführte Profil auf jeden Fall vollständig unter Wasser liegt. Bei Druckdifferenzen zwischen den Tanks bzw. Undichtigkeiten an den Kalibrierblenden wird allenfalls Wasser von einem Tank in den anderen gezogen, es erfolgt aber keine Ansaugung von Luft.

Weitere vorteilhafte Ausgestaltungen sind den weiteren Unteransprüchen zu entnehmen und werden nachfolgend mit Bezug auf die Zeichnung näher erläutert. Die Figuren zeigen im Einzelnen:

Fig. 1      die erfindungsgemäße Vakuumkalibriervorrichtung in einer perspektivischen Ansicht;
Fig. 2      die Vakuumkalibriervorrichtung in seitlicher Prinzipskizze;
Fig. 3      die Vakuumkalibriervorrichtung in einer Schnittdarstellung quer durch eine Teilkammer;
Fig. 4      zwei miteinander gekoppelte Vakuumkalibriervorrichtungen in einer seitlichen Schnittdarstellung;
Fig. 5a     Kugelrohrflansche in Ansicht von vorne und im Schnitt;
Fig. 6      die Vakuumkalibriervorrichtung in Draufsicht; und
Fig. 7      eine Prinzipskizze der Vakuumkalibriervorrichtung.

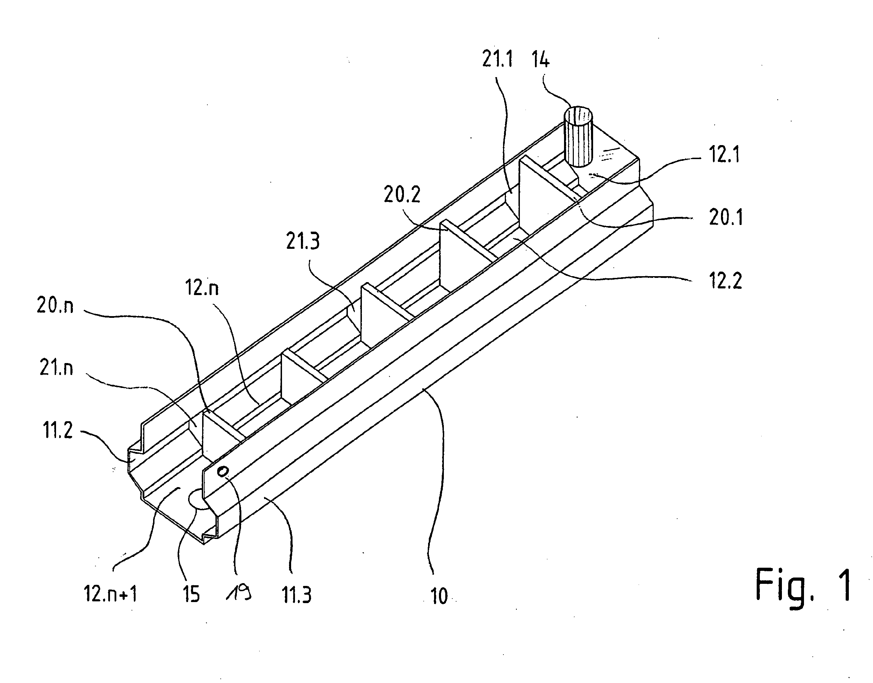

Figur 1 zeigt einen Wassertank 10 als wesentlichen Teil der erfindungsgemäßen Vakuumkalibriervorrichtung, der durch eine Vielzahl beabstandet zueinander parallel angeordneter Abstreifelemente 20.1, 20.2 ... 20.n in einzelne Teilkammern 12.1, 12.2 ... 12.n+1 geteilt ist. In Figur 1 nicht dargestellt sind der Übersicht halber die stirnseitigen Abschlüsse und ein den Wassertank nach oben abschließender Deckel, durch den der Wassertank 10 insgesamt vakuumdicht verschließbar ist.

Die Abstreifelemente 20.1, 20.2 ... 20.n können entlang eines Wasserstroms, der zwischen einem Wasserzulauf 14 und einem Wasserablauf 15 geführt ist, in ihrer Höhe schrittweise abnehmen. Jedenfalls ist der Fließweg aber so ausgelegt, dass der Kühlwasserstand von Teilkammer zu Teilkammer sinkt und insgesamt ein hydrostatistisches Druckgefälle zwischen der ersten Teilkammer 12.1 und der letzten Teilkammer 12.n+1 ausgebildet ist.

Die Abstreifelemente 20.1..., 20.2... 20.n weisen in Fig. 1 nicht dargestellte Ausnehmungen auf, durch die hindurch ein Kunststoffhohlprofil geführt wird und die das in der Vakuumkalibriervorrichtung bis unter die Erweichungstemperatur abzukühlende Kunststoffhohlprofil stützen und formen. Durch Anlegen eines Vakuums an einen Vakuumleitungsanschluss 19 wird ein Unterdruck im Wassertank 10 erzeugt, der dazu führt, dass der im Inneren des extrudierten Kunststoffhohlprofils herrschende Umgebungsdruck größer ist als der Außendruck im Wassertank 10, wodurch ein Expandieren des noch weichen Kunststoffhohlprofils und Anlegen an die formenden Ausnehmungen der Abstreifelemente erfolgt.

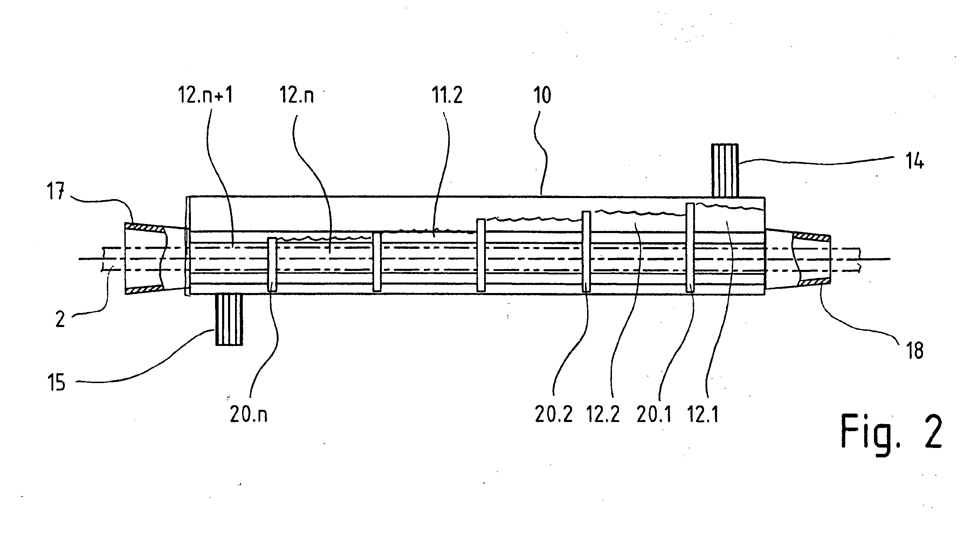

In Figur 2 ist das Funktionsprinzip in einer seitlichen Prinzipskizze dargestellt. Ein Kunststoffhohlprofil 2 wird durch eine Öffnungsausnehmung 18 in den Wassertank 10 geführt, läuft dann durch die Ausnehmungen in den Abstreifelementen 20.1, 20.2... 20.n hindurch und tritt an einer weiteren Öffnungsausnehmung 17 wieder aus der Vakuumkalibriervorrichtung heraus. Um eine Wärmeabfuhr beim Kunststoffhohlprofil 2 zu bewirken und ein Erstarren desselben herbeizuführen, wird dieses innerhalb der Vakuumkalibriervorrichtung ständig mit Kühlwasser umspült. Vorzugsweise liegt der durch die Wellenlinien in Figur 2 angedeutete Wasserstand stets oberhalb des Profilquerschnitts des Kunststoffhohlprofils 2.

In Figur 2 ist auch erkennbar, dass der Wasserstand treppenförmig sinkt. In Figur 2 sind mit den Wellenlinien die maximalen Wasserstände angedeutet, die durch die Höhe der Abstreifelemente vorgegeben sein können. Ein Überfließen der Oberkante der Abstreifelemente ist jedoch im Normalbetrieb der Vakuumkalibriervorrichtung nicht vorgesehen. Vielmehr soll ein mäanderförmiger Fließweg seitlich an den Abstreifelementen 20.1, 20.2 ... 20.n vorbei ausgebildet sein. Hierzu weist der Wassertank 10 seitliche Fließkanäle 11.2, 11.3 (vgl. Fig. 1) auf.

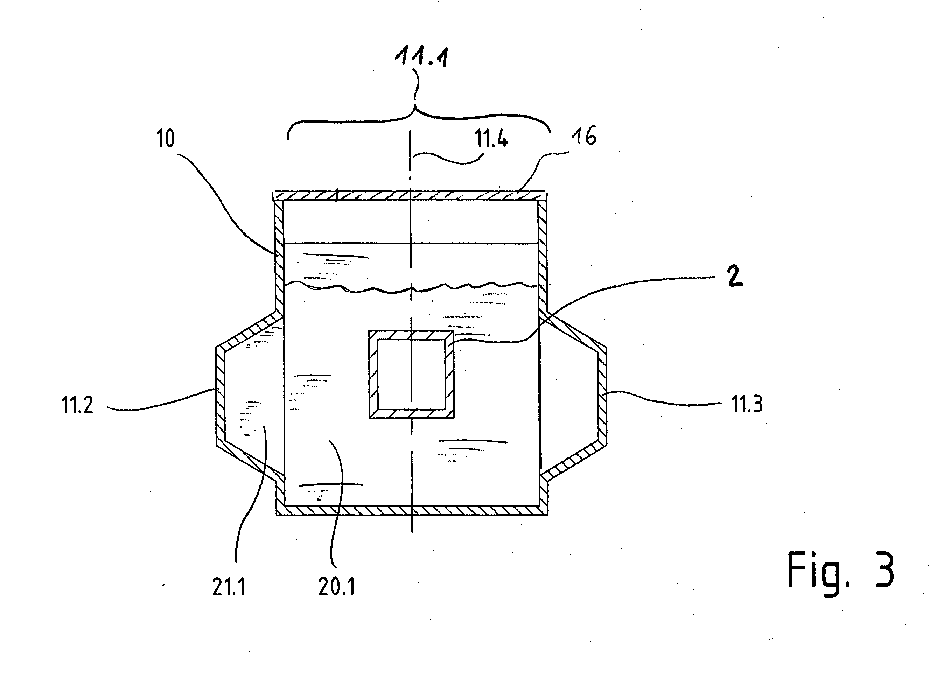

Wie insbesondere in der Schnittdarstellung der Figur 3 dargestellt, ist neben jedem Abstreifelement 20.1 nur jeweils einer der beiden seitlichen Querschnittsbereiche der Seitenfließkanäle freigegeben, wohingegen der jeweils gegenüberliegende Querschnittsbereich 11.2 durch eine Absperrplatte 21.1 verschlossen ist. Diese Absperrplatten 21.1, 21.2, 21.3, 21.n sind abwechselnd rechts bzw. links an den Abstreifelementen angeordnet.

Besonders vorteilhaft ist die in Figur 2 erkennbare Ausstattung der Öffnungsausnehmungen mit Kegelrohrflanschen 17, 18. Ein erster Kegelrohrflansch ist mit seinem verjüngten Ende nach außen ausgerichtet, während auf der anderen Seite ein Kegelrohrflansch 17 angeordnet ist, der eine konische Bohrung aufweist. Die Kegelrohrflansche 18 mit kegeliger Mantelfläche können in die entsprechenden Kegelrohrflansche 17 mit kegelrohrförmiger Innenfläche eingeschoben werden, wodurch sich eine besonders gute Dichtwirkung ergibt. Mehrere Vakuumkalibriervorrichtungen können miteinander auf diese Weise verbunden werden. Da diese Verbindung luftdicht ist, kann die Leistung der Vakuumpumpen von Extrusionsanlagen, die in der Praxis oftmals zu einem überwiegenden Teil nur zur Beseitigung von Leckluftströmungen dient, ganz erheblich gedrosselt werden.

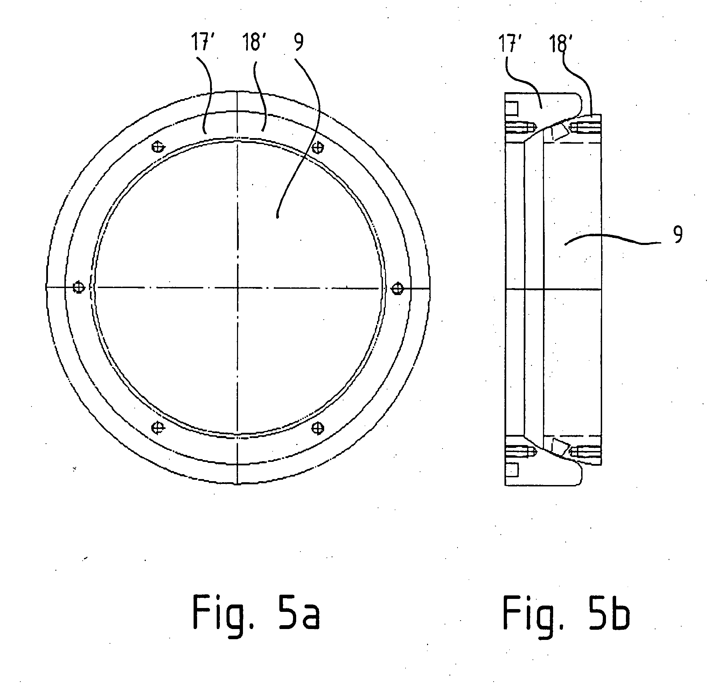

Falls es notwendig sein sollte, Winkelversätze zwischen zwei Wassertanks auszugleichen, können auch die in Fig. 5 dargestellten Kugelrohrflansche 17', 18' vorgesehen sein, bei denen eine kugelabschnittsförmige Außenfläche 18' in eine entsprechend kugelabschnittsförmige Bohrung 17' an dem zu koppelnden Gegenstück eingreift.

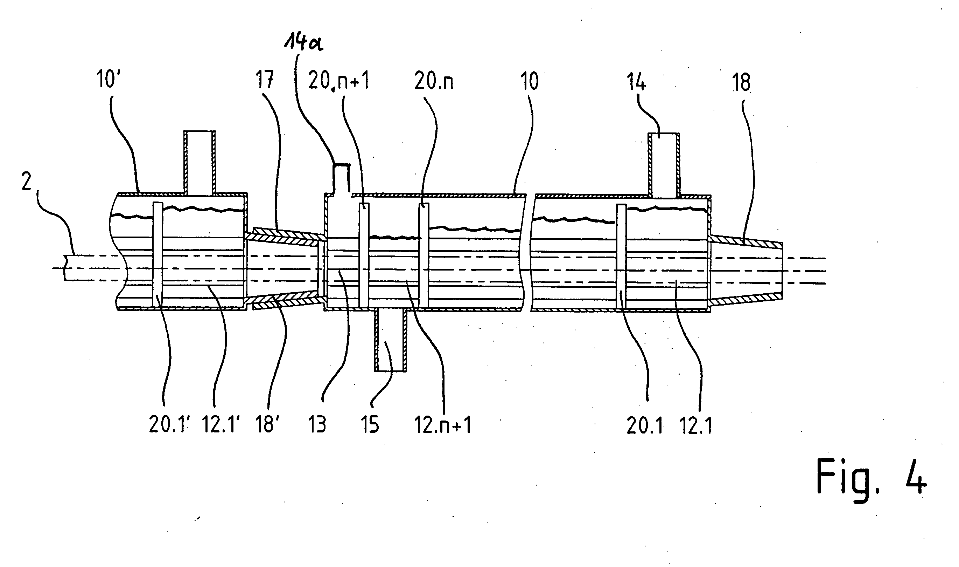

Vorteilhaft ist weiterhin eine Ausführungsform, die in Figur 4 dargestellt ist. Hierbei ist hinter der letzten Teilkammer 12.n+1 mit dem Wasserablauf 15 noch ein weiteres Abstreifelement 20.n+1 vorgesehen, durch das zur stromabwärts gelegenen Durchführungsöffnung hin eine Schleusenkammer 13 ausgebildet ist. Die Schleusenkammer 13 ist so hoch mit Wasser gefüllt, dass die Durchführungsöffnung 9 mit dem darin geführten Kunststoffhohlprofil 2 vollständig unter Wasser liegt. Auf diese Weise wird verhindert, dass Luft von einem Tank 10 in den anderen Tank 10' gezogen wird. Der Wasserstand in der Schleusenkammer 13 kann durch einen zusätzlichen Wasseranschluss 14a eingestellt werden.

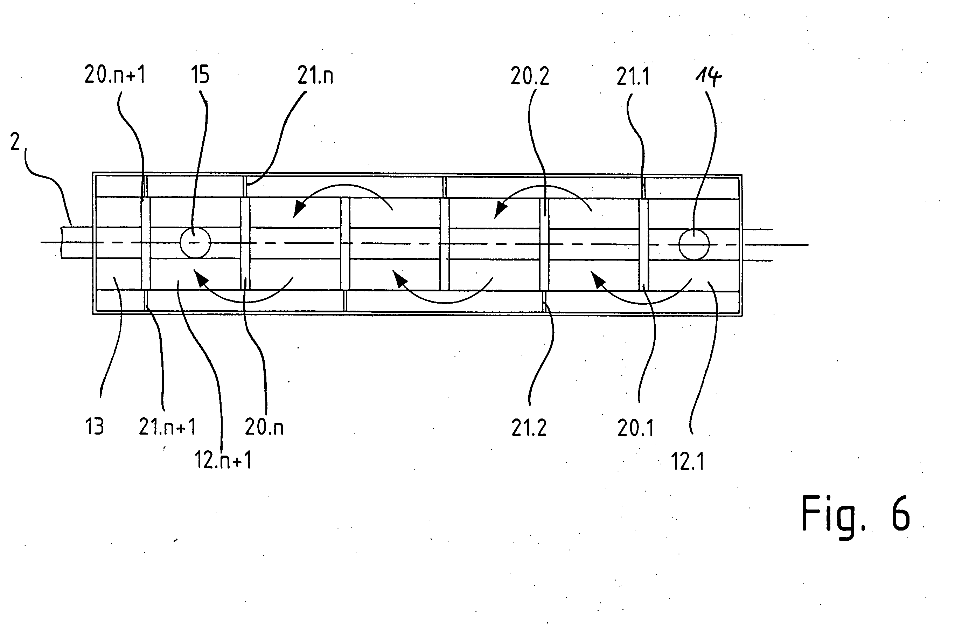

Fig. 6 zeigt den durch die Absperrplatten 21.1, 21.2, 21.n+1 in den seitlichen Fließkanälen aufgezwungenen Fließweg nochmals in einer Draufsicht auf den Wassertank 10 mit abgenommenem Deckel. Auch die Schleusenkammer 13 ist bei der dargestellten Ausführungsform vorhanden.

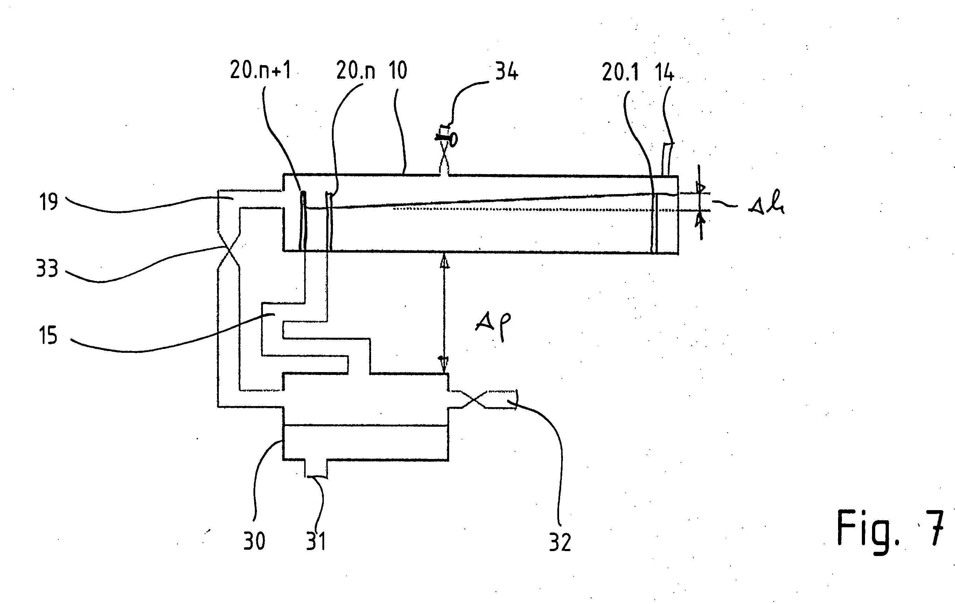

Fig. 7 zeigt die erfindungsgemäße Vakuumkalibriervorrichtung in einer Prinzipdarstellung einer Ausführungsform, die Vorteile hinsichtlich des Wasserablaufs 15 und des Vakuumanschlusses 19 bietet. Das Kühlwasser fließt dort vom Zulauf 14 um eine Höhendifferenz $\Delta h$ hinab durch den Tank 10 zum Ablauf 15.

Am Ablauf 15 fließt das Kühlwasser in einen unterhalb des Wassertanks angeordneten, nach außen luftdicht abgeschlossenen Auffangbehälter 30. Das Kühlwasser, das sich im Auffangbehälter 30 sammelt, wird über den Stutzen 31 mit Hilfe einer Wasserpumpe abgepumpt. Infolge der Höhendifferenz in der Ablaufleitung entsteht ein Druckgefälle $\Delta p$ auch im Luftraum oberhalb des Wasserspiegels im Auffangbehälter 30 und in der Vakuumanschlussleitung 19, die über eine Drossel 33 zum Luftraum des Wassertanks 10 führt. Durch dieses Druckgefälle wird Luft aus dem Wassertank 10 in den Auffangbehälter 30 gesaugt. Der so bewirkte Unterdruck in der Vakuumanschlussleitung 19 kann durch eine bei einem Anschluss 32 am Auffangbehälter angeschlossene zusätzliche Vakuumpumpe noch verstärkt werden. Im Deckel des Wassertanks 10 ermöglicht eine weitere Drossel 34 das Nachströmen von Luft.

Gemäß dem erfindungsgemäßen Verfahren wird die Abmessung der Kühlvorrichtung so gewählt, dass die Partikel ab einem bestimmten Durchmesser zwischen zwei benachbarten Abstreifelementen 12.i, 12.i+1 zu Boden sinken und so dem Wasserkreislauf entzogen werden.

Aus dem Stokes'schen Gesetz

$$F_R = 6 \pi \eta r v_s,$$

folgt, dass die Reibungskraft $F_R$ eines Partikels um so größer wird, je höher die Geschwindigkeit $v_s$ des Partikel ist, mit dem er in einer Flüssigkeit mit der Viskosität $\eta$ sinkt und je größer der Teilchenradius r ist.

Als Gegenkraft $F_G$ tritt die Differenz aus Gewichts- und Auftriebskraft auf:

$$F_G = g \, [\rho(\text{Partikel}) - \rho(\text{Kühlfl.})] \, V(\text{Partikel})$$

Im Gleichgewicht sind Reibungskraft und Gegenkraft gleich groß, der Partikel sinkt mit gleichförmiger Geschwindigkeit zu Boden.

Ein Quarzpartikel, z. B. ein Sandkorn, mit einem Durchmesser von ca. 200 $\mu$m und einer Dichte von 2.400 kg/m$^3$ sinkt z. B. in Wasser mit einer Geschwindigkeit $v_s$ von 5 bis 50 mm/s , insbesondere 25 bis 30 mm/s, zu Boden.

Im Folgenden soll der Bereich der Vakuumkalibriervorrichtung betrachtet werden, der sich zwischen zwei Abstreifelementen 12.1, ...12.n+1 befindet:

In den Abstreifelementen selbst oder daneben befinden sich die Öffnungen, durch welche die Kühlflüssigkeit hindurchströmt. Wichtig ist nun die Höhendifferenz $\Delta$h zwischen der Stelle mit dem höchsten Zulaufpunkt und der Stelle mit dem niedrigsten Ablaufpunkt der Kühlflüssigkeit.

Beträgt die Verweilzeit $t_v$ des Partikels zwischen den beiden Abstreifelementen mindestens

$$t_v = \Delta h \, / \, v_s,$$

dann sinkt dieser zwischen Ein- und Auslauf um die Höhendifferenz $\Delta$h ab und befindet sich dann nicht mehr im freien Wasserkreislauf.

Die mittlere Verweilzeit $t_v$ der Kühlflüssigkeit hängt nun vom Volumen V der Kühlflüssigkeit zwischen 2 Abstreifelemente und dem Volumenstrom Vp der Kühlflüssigkeit ab. Das Volumen V muss demnach mindestens

$$V = Vp * t_v = Vp * \Delta h \, / \, v_s$$

betragen, damit die notwendige Verweilzeit erreicht wird. Beträgt z. B. der Volumenstrom Vp = 3 m$^3$/h, die Höhendifferenz $\Delta$h = 70 mm und die Sinkgeschwindigkeit 27 mm/s, so muss das Volumen zwischen den Abstreifelemente 2,16 dm$^3$ betragen. Dabei handelt es sich um das freie Volumen zwischen zwei Abstreifelementen.

Der Abstand der Abstreifelemente L, sowie die Breite der Kühlvorrichtung B wird meist vorgegeben, woraus sich die Höhe H der Kühlvorrichtung berechnen lässt:

$$H = V \, / \, (B * L)$$

Wird als Abstand L der kleinste Abstand zwischen zwei Abstreifelementen gewählt, der in der Kühlvorrichtung vorkommt, so ist gewährleistet, dass in allen Kammern mindestens die geforderte Verweilzeit erreicht wird.

Mit L = 60 mm und B = 240 mm berechnet sich H im obigen Beispiel zu 150 mm.

Damit die Partikel durch die erhöhte Strömungsgeschwindigkeit im Bereich der Durchströmöffnungen der Kühlflüssigkeit nicht wieder aufgewirbelt werden, dürfen die Fließkanäle 11.2, 11.3 nicht bis auf den Boden des Wassertanks reichen, sondern müssen einen Abstand von 5 bis 40 mm, vorzugsweise 15 mm, zum Boden des Wassertanks besitzen.

Wird die Vakuumkalibriervorrichtung mit den beschriebenen Verfahren betrieben, so werden deutlich weniger Kratzer auf dem Profil durch Partikel aus der Kühlflüssigkeit beobachtet.

**Patentansprüche**

1. Vakuumkalibriervorrichtung zur Kalibrierung eines extrudierten Kunststoffhohlprofils (2), mit einem Wassertank (10),

    - in dem eine Vielzahl von untereinander beabstandeten Abstreifelementen (20.1, 20.n, 20.n+1) angeordnet ist,
    - der einen Wasserzulauf (14), einen Wasserablauf (15) und einen Vakuumleitungsanschluss (19) aufweist und
    - der an seinen Stirnseiten jeweils mit Durchführungsöffnungen (9) für das Kunststoffhohlprofil (2) versehen ist,

und wobei ein Fließweg für Kühlwasser alternierend seitlich an den Abstreifelementen (20.1, ..., 20.n) vorbei geführt ist,
und wobei ein hydrostatisches Druckgefälle ausgebildet ist zwischen:

    - einer ersten Teilkammer (12.1) im Bereich des Wasserzulaufs (14), die stromabwärts durch ein erstes Abstreifelement (20.1) begrenzt ist und
    - einer Teilkammer (12.n) im Bereich des Wasserablaufs, die stromaufwärts durch ein letztes Abstreifelement (20.n-1) begrenzt ist,

wobei die Soll-Wasserstände in der ersten Teilkammer (12.1) und der letzten Teilkammer (12.n+1) eine Höhendifferenz von 10 mm bis 100 mm aufweisen und oberhalb der Teilkammern (12.1,...,12.n) ein durchgängiger Luftraum geschaffen ist, **dadurch gekennzeichnet, dass** der Fließweg durch die Teilkammern (12.1,...,12.n+1) und durch alternierend seitlich neben den Abstreifelementen (20.1,..., 20.n) vorbei führende seitliche Fließkanäle (11.2, 11.3) gebildet ist und der Querschnitt des Wassertanks (10) einen Rechteckbereich (11.1) und zwei spiegelsymmetrisch zu einer Hochachse (11.4) ausgerichtete, nach außen verjüngende trapezförmige Ausbuchtungen als Fließkanäle (11.2; 11.3) aufweist.

2. Vakuumkalibriervorrichtung nach Anspruch 1, **dadurch gekennzeichnet, dass** die Unterkanten der Fließkanäle (11.2; 11.3) jeweils einen Abstand zum Grund des Wassertanks (10) von 5 mm bis 40 mm wahren.

3. Vakuumkalibriervorrichtung nach Anspruch 2, **dadurch gekennzeichnet, dass** die Unterkanten der Fließkanäle (11.2; 11.3) jeweils einen Abstand zum Grund des Wassertanks (10) von 15 mm wahren.

4. Vakuumkalibriervorrichtung nach einem der Ansprüche 1 bis 3, **dadurch gekennzeichnet, dass** die Durchführungsöffnungen (9) jeweils mit einem Kegelrohrflansch (17; 18) versehen sind.

5. Vakuumkalibriervorrichtung nach Anspruch 4, **dadurch gekennzeichnet, dass** der Kegelrohrflansch (18) der einen Durchführungsöffnung (9) einen Rohrabschnitt mit kegelabschnittsförmigem Außenmantel und der Kegelrohrflansch (17) der jeweiligen anderen Durchführungsöffnung (9) einen Rohrabschnitt mit einer kompatiblen kegelabschnittsförmigen Muffenbohrung aufweist.

6. Vakuumkalibriervorrichtung nach einem der Ansprüche 1 bis 3, **dadurch gekennzeichnet, dass** die Durchführungsöffnungen (9) jeweils mit einem Kugelrohrflansch (17', 18') versehen sind.

7. Vakuumkalibriervorrichtung nach Anspruch 6, **dadurch gekennzeichnet, dass** der Kugelrohrflansch (18') einer Durchführungsöffnung (9) einen Rohrabschnitt mit kugelabschnittsförmigem Außenmantel und der Kugelrohrflansch (17') der jeweiligen anderen Durchführungsöffnung einen Rohrabschnitt mit dazu kompatibler kugelabschnittsförmiger Muffenbohrung aufweist.

8. Vakuumkalibriervorrichtung nach einem der Ansprüche 4 bis 7, **dadurch gekennzeichnet, dass** die Kegel- oder Kugelrohrflansche (17, 18; 17', 18') aus Polyamid bestehen.

9. Vakuumkalibriervorrichtung nach einem der Ansprüche 4 bis 8, **dadurch gekennzeichnet, dass** die Muffenbohrungen jeweils mit wenigstens einem O-Ring versehen sind.

10. Vakuumkalibriervorrichtung nach einem der Ansprüche 1 bis 9, **dadurch gekennzeichnet, dass** die Länge der Teilkammern (12.1,...,12.n) zwischen dem Einlauf (14) und dem Auslauf (15) zunimmt.

**Claims**

1. Vacuum calibration device for calibrating an extruded synthetic material hollow profile (2), having a water tank (10),

   - in which a plurality of mutually spaced stripping elements (20.1, 20.n, 20.n+1) is disposed,
   - which has a water inlet (14), a water outlet (15) and a vacuum line connection (19) and
   - which is provided on its end faces in each case with through orifices (9) for the synthetic material hollow profile (2),

   and wherein a flow path for cooling water runs laterally in an alternating manner past the stripping elements (20.1,..., 20.n),
   and wherein a hydrostatic pressure gradient is formed between:

   - a first partial chamber (12.1) in the region of the water inlet (14), which is defined downstream by a first stripping element (20.1) and
   - a partial chamber (12.n) in the region of the water outlet, which is defined upstream by a final stripping element (20.n-1),

   wherein the desired water levels in the first partial chamber (12.1) and the final partial chamber (12.n+1) have a height difference of 10mm to 100mm and above the partial chambers (12.1, ..., 12.n) a through-going air chamber is created,
   **characterised in that** the flow path is formed by the partial chambers (12.1, ..., 12.n+1) and by lateral flow channels (11.2, 11.3) which run laterally in an alternating manner next to and past the stripping elements (20.1, ..., 20.n), and the cross-section of the water tank (10) has a rectangular region (11.1) and two trapezoidal protrusions, which taper towards the outside and are aligned with mirror symmetry with respect to a vertical axis (11.4), as flow channels (11. 2; 11.3).

2. Vacuum calibration device as claimed in claim 1, **characterised in that** the lower edges of the flow channels (11.2; 11.3) are each at a distance of 5mm to 40mm to the base of the water tank (10).

3. Vacuum calibration device as claimed in claim 2, **characterised in that** the lower edges of the flow channels (11.2; 11.3) are each at a distance of 15mm to the base of the water tank (10).

4. Vacuum calibration device as claimed in any one of claims 1 to 3, **characterised in that** the through orifices (9) are each provided with a conical tube flange (17; 18).

5. Vacuum calibration device as claimed in claim 4, **characterised in that** the conical tube flange (18) of one through orifice (9) has a tube portion with an outer surface in the form of a portion of a cone, and the conical tube flange (17) of the respective other through orifice (9) has a tube portion with a compatible sleeve bore in the form of a portion of a cone.

6. Vacuum calibration device as claimed in any one of claims 1 to 3, **characterised in that** the through orifices (9) are each provided with a ball tube flange (17', 18').

7. Vacuum calibration device as claimed in claim 6, **characterised in that** the ball tube flange (18') of one through orifice (9) has a tube portion with an outer surface in the form of a portion of a ball, and the ball tube flange (17') of the respective other through orifice has a tube portion with a sleeve bore which is compatible thereto and is in the form of a portion of a ball.

8. Vacuum calibration device as claimed in any one of claims 4 to 7, **characterised in that** the conical or ball tube flanges (17, 18; 17', 18') consist of polyamide.

9. Vacuum calibration device as claimed in any one of claims 4 to 8, **characterised in that** the sleeve bores are each provided with at least one O-ring.

10. Vacuum calibration device as claimed in any one of claims 1 to 9, **characterised in that** the length of the partial chambers (12.1, ..., 12.n) increases between the inlet (14) and the outlet (15).

**Revendications**

1. Dispositif de calibrage à vide pour le calibrage d'un profilé creux en matière plastique (2) extrudé, avec un réservoir d'eau (10),

   - dans lequel une pluralité d'éléments de raclage (20.1, 20.n, 20.n+1) espacés les uns des autres est disposée,
   - qui présente une amenée d'eau (14), une évacuation d'eau (15) et un raccordement de conduite à vide (19),
   - qui est pourvu sur ses côtés avant respectivement d'ouvertures de passage (9) pour le profilé creux en matière plastique (2),

   et dans lequel une course d'écoulement pour de l'eau de refroidissement passe en alternance latéralement devant les éléments de raclage (20.1, ..., 20.n), et dans lequel une chute de pression hydrostatique est réalisée entre :

   - une première chambre partielle (12.1) dans la zone de l'amenée d'eau (14) qui est délimitée en aval par un premier élément de raclage (20.1) et
   - une chambre partielle (12.n) dans la zone de l'évacuation d'eau qui est délimitée en amont par un dernier élément de raclage (20.n-1),

   dans lequel les niveaux d'eau de consigne dans la première chambre partielle (12.1) et la dernière chambre partielle (12.n+1) présentent une différence de hauteur de 10 à 100 mm et un vide d'air continu est créé au-dessus des chambres partielles (12.1, ..., 12.n), **caractérisé en ce que** la course d'écoulement est formée par les chambres partielles (12.1, ..., 12.n+1) et par des canaux d'écoulement (11.2, 11.3) latéraux passant en alternance latéralement devant les éléments de raclage (20.1, ..., 20.n) et la section du réservoir d'eau (10) présente une zone rectangulaire (11.1) et deux renflements trapézoïdaux, orientés de manière symétrique à un axe vertical (11.4), se rétrécissant vers l'extérieur comme canaux d'écoulement (11.2 ; 11.3).

2. Dispositif de calibrage à vide selon la revendication 1, **caractérisé en ce que** les arêtes inférieures des canaux d'écoulement (11.2 ; 11.3) conservent respectivement une distance par rapport au fond du réservoir d'eau (10) de 5 à 40 mm.

3. Dispositif de calibrage à vide selon la revendication 2, **caractérisé en ce que** les arêtes inférieures des canaux d'écoulement (11.2 ; 11.3) conservent respectivement une distance par rapport au fond du réservoir d'eau (10) de 15 mm.

4. Dispositif de calibrage à vide selon l'une quelconque des revendications 1 à 3, **caractérisé en ce que** les ouvertures de passage (9) sont pourvues respectivement d'une bride de tube conique (17 ; 18).

5. Dispositif de calibrage à vide selon la revendication 4, **caractérisé en ce que** la bride de tube conique (18) d'une ouverture de passage (9) présente un tronçon de tube avec une enveloppe extérieure en forme d'onglet de cône et la bride de tube conique (17) de l'autre ouverture de passage (9) respective présente un tronçon de tube avec un perçage de manchon en forme d'onglet de cône compatible.

6. Dispositif de calibrage à vide selon l'une quelconque des revendications 1 à 3, **caractérisé en ce que** les ouvertures de passage (9) sont pourvues respectivement d'une bride de tube sphérique (17', 18').

7. Dispositif de calibrage à vide selon la revendication 6, **caractérisé en ce que** la bride de tube sphérique (18') d'une ouverture de passage (9) présente un tronçon de tube avec une enveloppe extérieure en forme de segment sphérique et la bride de tube sphérique (17') de l'autre ouverture de passage respective présente un tronçon de tube avec une perçage de manchon en forme de segment sphérique compatible.

8. Dispositif de calibrage à vide selon l'une quelconque des revendications 4 à 7, **caractérisé en ce que** les brides de tube conique et sphérique (17, 18 ; 17', 18') se composent de polyamide.

9. Dispositif de calibrage à vide selon l'une quelconque des revendications 4 à 8, **caractérisé en ce que** les perçages de manchon sont pourvus respectivement d'au moins un joint torique.

10. Dispositif de calibrage à vide selon l'une quelconque des revendications 1 à 9, **caractérisé en ce que** la longueur des chambres partielles (12.1, ..., 12.n) augmente entre l'entrée (14) et la sortie (15).

Fig. 1

Fig. 2

EP 1 579 978 B1

Fig. 3

Fig. 4

17'  18'  9

17'  18'

9

Fig. 5a

Fig. 5b

EP 1 579 978 B1

20.n+1　15　21.n　　20.2　21.1　14

2

13　21.n+1　20.n　　21.2　20.1

12.n+1　　12.1

Fig. 6

EP 1 579 978 B1

Fig. 7

EP 1 579 978 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 659537 A2
- US 5514325 A

- EP 659537 A